# EUROPEAN PATENT APPLICATION

(11) **EP 2 037 454 A1**
(43) Date of publication of application: **18.03.2009**
(21) Application number: 08016024.5
(22) Date of filing: 11.09.2008
(51) Int. Cl.: G11B 5/86

(54) **Master carrier for magnetic transfer, magnetic transfer method and magnetic recording medium**

(30) Priority: 13.09.2007 JP 2007237537
(71) Applicant: Fujifilm Corporation, Tokyo 106-8620 (JP)
(72) Inventor: Fujiwara, Naoto, Odawara-shi Kanagawa (JP); Nagao, Makoto, Odawara-shi Kanagawa (JP); Sugita, Ryuji, Odawara-shi Kanagawa (JP)
(74) Representative: HOFFMANN EITLE

(57) **Abstract**

A master carrier (20) for magnetic transfer includes a transfer portion on which a magnetic layer (204) corresponding to magnetic information for transfer is formed, and a non-transfer portion (207) forming a concave shape relatively low with respect to the transfer portion having the magnetic layer (204), wherein the magnetic layer (204) of the transfer portion has perpendicular magnetic anisotropy, with residual magnetization Mr of 500 emu/cc or less, and saturation magnetization Ms of 900 emu/cc or more. CoPt can be used as a material of the magnetic layer (204), and use of Co₄Pt₁ (at%) is especially preferable. Thereby, a master carrier for magnetic transfer which can generate a high magnetic field capable of transfer of a short bit to a high density medium is provided.

## Description

### BACKGROUND OF THE INVENTION

### Field of the Invention

The present invention relates to a master carrier for magnetic transfer and a magnetic transfer method using this, and a magnetic recording medium created by the method, and particularly relates to a technique of magnetically transferring an information pattern such as servo information to a perpendicular magnetic recording type magnetic recording medium (magnetic disk) with a large capacity and high recording density.

### Description of the Related Art

In recent years, magnetic recording and reproducing apparatuses tend to have high densification in recording density in order to realize miniaturization and a large capacity, and especially in the field of a hard disk drive (HDD) which is a typical magnetic storage device, abrupt advance in technology is seen.

With an increase in information content, inexpensive high density magnetic recording media with a large capacity capable of recording a large amount of information and preferably providing so-called quick access capable of reading a required point within a short time are desired. In these high density magnetic recording media, information recording regions are constituted of narrow tracks. In order to accurately scan a narrow track width by a magnetic head and reproduce a signal at a high S/N, a so-called tracking servo technology plays an important role. In order to perform tracking servo, a sector servo method is widely adopted.

The sector servo method is a method in which servo information including servo signals for positioning tracks, address information signals for the tracks, reproduction clock signals and the like is recorded in servo fields correctly arranged at constant angles or the like on the data surface of a magnetic recording medium such as a magnetic disk, and a magnetic head scans the servo fields to read the servo information and makes correction while confirming its own position.

Servo information needs to be recorded beforehand as a pre-format on a magnetic recording medium when the magnetic recording medium is fabricated. Presently, pre-formatting is performed using a dedicated servo recording device. The servo recording device which is presently used includes a magnetic head having a head width of about 75% of a track pitch, for example, and while rotating a magnetic disk with the magnetic head close to the magnetic disk, the servo recording device records servo signals while moving the magnetic head from the outer circumference of the magnetic disk to the inner circumference at every half track. Therefore, the servo recording device requires a long time for pre-format recording of one magnetic disk, and has a problem in production efficiency, which becomes a factor that increases cost.

Therefore, as a method for performing pre-formatting accurately and efficiently, there is proposed a method for magnetically transferring the information of the master recording medium on which a pattern corresponding to the servo information is formed to a magnetic recording medium (Japanese Patent Application Laid-Open No. 2003-203325, Japanese Patent Application Laid-Open No. 2000-195048, United States Patent No. 7218465B1 and the like).

In the magnetic transfer, by using a master carrier having a magnetic layer pattern corresponding to information (for example, servo information) to be transferred to a magnetic recording medium (slave medium) such as a magnetic disk for transfer, a recording magnetic field is applied with the master carrier and the magnetic recording medium (slave medium) in tight contact with each other, and thereby, the magnetic pattern corresponding to the magnetic layer pattern of the master carrier is magnetically transferred to the magnetic recording medium. This method has the advantages that recording can be statically performed without changing relative positions of the master carrier and the magnetic recording medium, accurate pre-format information can be recorded, and the time required for recording is an extremely short time.

With high densification of magnetic recording, high-density (short bit) recording is also desired in magnetic transfer. However, magnetic transfer is under severe circumstances in which as the bits become shorter, the magnetic fields themselves of the convex portions usable for transfer become smaller, a magnetic difference between the convex portion and concave portion decreases, and with this, a magnetization difference of slave media does not increase, while spacing loss becomes larger in shorter bit. Therefore, new technical innovation is desired.

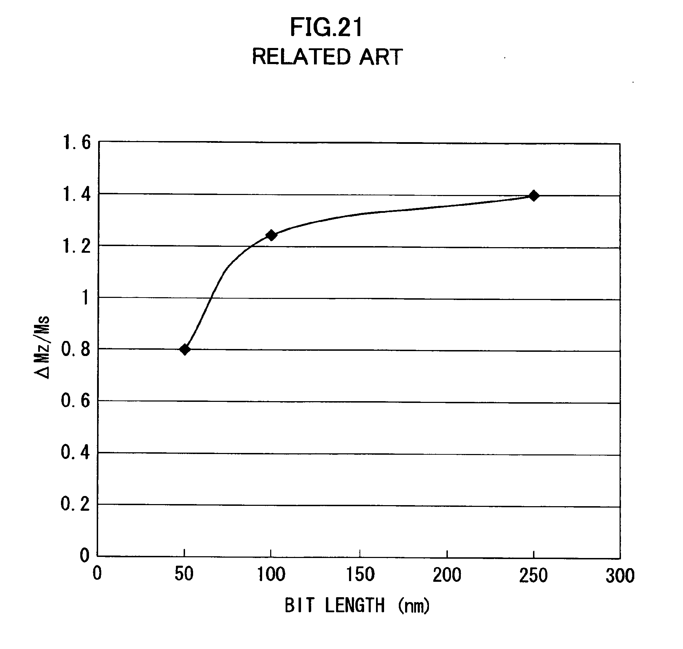

Fig. 21 is a graph of the result of calculation (simulation) showing the situation where as the bit length becomes shorter, magnetization of a slave medium is not sufficiently performed. The horizontal axis represents a bit length, and the vertical axis represents a value (ΔMz/Ms) obtained by normalizing a change (ΔMz) in magnetization of a slave medium due to transfer with saturation magnetization Ms. ΔMz is expressed by ΔMz=ΔMz2-Mz1 from a value Mz1 (negative value) of initial magnetization, and a value of magnetization after transfer (value when magnetization is reversed) Mz2 (positive value). When the value of initial magnetization ideally becomes -Ms, and magnetization at the time of transfer ideally becomes Ms, ΔMz/Ms becomes 2, which is the maximum value, and this means that at this time, the ability of the magnetic layer of the magnetic disk is utilized at a maximum.

As is obvious from the graph of Fig. 21, as the bit length becomes smaller, the value of ΔMz/Ms reduces. In the bit of the bit length of 50 nm, the value of ΔMs/Ms is 0.8, which is about 40% of the maximum value 2. Specifically, this means that only 40% of the ability of the magnetic layer is utilized and the ability of the magnetic recording layer cannot be sufficiently utilized. In this point, it is desired to realize favorable transfer even in a short bit.

### SUMMARY OF THE INVENTION

Conventionally, an isotropic (without magnetic anisotropy) soft magnetic material is frequently used for the magnetic layers of master carriers. As the soft magnetic layer which is applied to a master carrier, the one with large saturation magnetization Ms is generally said to be preferable, and conventionally, Fe₇Co₃ and the like are used as the magnetic layers of master carriers. Further, paragraph [0006] of Japanese Patent Application Laid-Open No. 2003-203325 also has the description that the saturation magnetization Ms of the master magnetic layer is preferably made large.

However, it is not such a simple matter as the larger the saturation magnetization Ms is made, the better. Specifically, when a magnetic layer with large saturation magnetization Ms is provided on the master carrier, a demagnetizing field (4π×Ms in the case of a plane) also becomes large, and therefore, even if a magnetic field is applied, only a part of it contributes to magnetization.

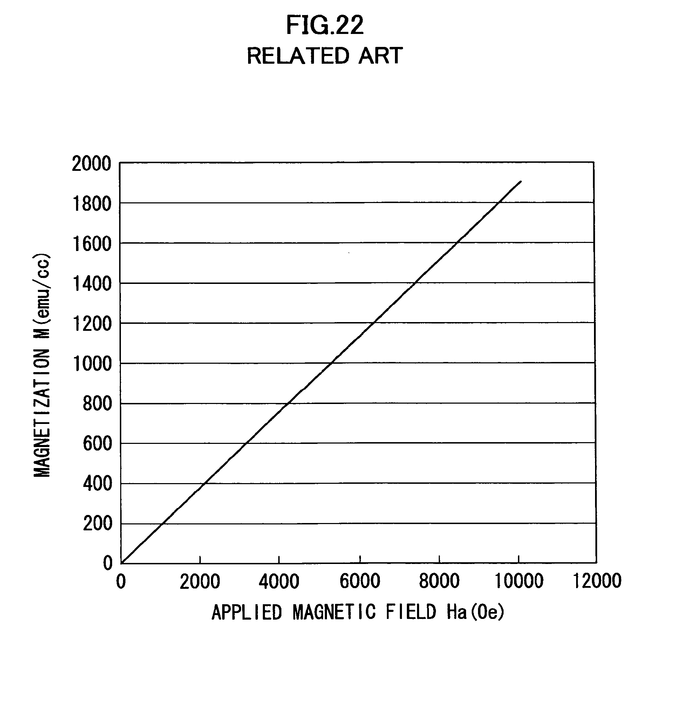

Occurrence of a demagnetizing field depends on the shape of a magnetic substance (relative relationship of the shape length), and an example of it is shown in Fig. 22. Fig. 22 shows the relationship of a magnetic field and magnetization when the magnetic field is applied in the depth direction and blocks whose shapes are determined by the ratio of the lengths of 2 in the radius direction of the master carrier, 0.5 in the circumferential direction and 0.5 in the depth direction (unit of the lengths does not matter) are provided.

When transfer to the slave medium with a coercive force Hc=4000 Oe is taken as an example, magnetization of the master magnetic layer (Fe₇Co₃ in this case) when a magnetic field Ha=5000 Oe is applied is about 950 emu/cc from the graph of Fig. 22. Since the saturation magnetization Ms of Fe₇Co₃ is 1900 emu/cc, only about half the ability of the material of Fe₇Co₃ (saturation magnetization Ms=1900 emu/cc) is magnetized. This is due to the phenomenon (demagnetizing field) in which the magnetic substance is magnetized by the external magnetic field, whereby a magnetic field occurs in the opposite direction, and the master magnetic layer becomes difficult to magnetize. Specifically, according to the example of Fig. 22, even if a magnetic field of 5000 Oe is applied, the master magnetic layer is magnetized by only about 950 emu/cc, and therefore, when the coercive force Hc of the slave medium is high, magnetization by the initial magnetizing step is not reversed.

As the transfer magnetic field Ha is increased, the amount of magnetization at the point which is in contact with the slave medium (master convex portion) increases, but a lot of magnetic field leaks out to the concave portion (portion which should maintain initial magnetization of the slave medium) of the master carrier, and therefore, there arises the problem that the value of the initial magnetization significantly decreases and the S/N of the transfer signals degrades. Accordingly, from the viewpoint of keeping balance, a magnetic field close to the coercive force Hc of the slave medium is applied in the conventional magnetic transfer to set the magnetization difference between the convex portion and the concave portion to be the maximum. However, in this case, a considerable amount of magnetic field also flows into the concave portion due to a demagnetizing field to degrade the initial magnetization of that portion.

Further, in perpendicular magnetic transfer, magnetic transfer is caused by moving the magnetic field of the master concave portion (between bits not contacting the magnetic layer) to the convex portion. When high density recording is performed and an area between bits becomes short, spacing loss becomes large as the bits become shorter while a usable magnetic field becomes less. Therefore, requirement of the magnetic transfer by short bits cannot be satisfied by the conventional magnetic layer.

Meanwhile, Japanese Patent Application Laid-Open No. 2000-195048 has the description that a perpendicular magnetization film having magnetic anisotropy in the perpendicular direction is preferable (paragraph [0037] of Japanese Patent Application Laid-Open No. 2000-195048) as the master magnetic layer in the case of perpendicular recording, but has no disclosure of required physical property values and the like. A number of studies on a perpendicular magnetic anisotropy film have been done following development of magnetic recording media, but these studies relate to perpendicular magnetization films for magnetic recording, and do not relate to the magnetic film used for a master carrier. The physical property required as the magnetic film for a perpendicular magnetic recording medium and the physical property required as a master magnetic layer are significantly different, and if the perpendicular magnetic film for a magnetic recording medium which has been conventionally studied is directly applied to a master magnetic layer, a favorable transfer characteristic cannot be obtained.

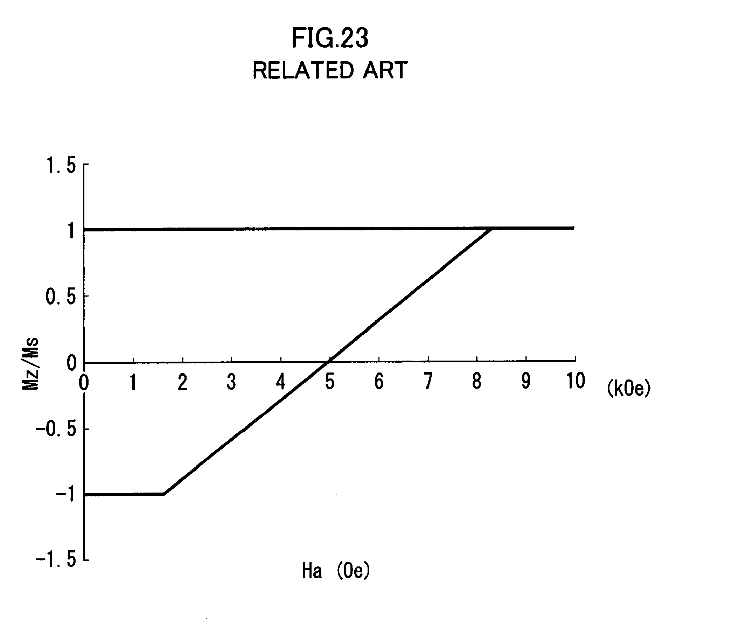

Fig. 23 shows the M-H curve (hysteresis curve) of a typical perpendicular magnetic recording media. Fig. 23 only shows the first quadrant and the fourth quadrant. In Fig. 23, the horizontal axis represents an external applied magnetic field, and the vertical axis represents magnetization which is normalized by the saturation magnetization Ms. The saturation magnetization Ms of the perpendicular magnetic recording medium shown in Fig. 23 is low and about 400 emu/cc, and the coercive force Hc is high and 5000 Oe. Further, a squareness ratio SQ (=Mr/Ms)=1. The reason why such properties are required is substantially as follows. Specifically, the magnetic film for a perpendicular magnetic recording medium needs to be recordable with a magnetic field from a magnetic head and capable to hold the record in the state in which the magnetic field is removed. Therefore, the squareness ratio SQ=1 is necessary. Further, for high density recording, the high coercive force Hc for improving the linearity of the transition region is necessary. Meanwhile, the high saturation magnetization Ms is desired, but materials with low Ms are actually used. This is because the high saturation magnetization Ms is not always required with an increase in sensitivity of a reproducing head (MR head), and the material and fabricating method with high Ms, small interaction among magnetization units and SQ=1 cannot be found out.

Application of the magnetic layer with the M-H curve as in Fig. 23 to the magnetic layer of the master carrier was experimentally tried, but the transfer pattern was not able to be transferred sharply. This is supposed to be because the transfer magnetic field was insufficient due to the low saturation magnetization Ms, the coercive force Hc was high and the squareness ratio SQ=1, magnetization remained on the master even after the applied magnetic field was decreased, whereby the magnetic field from this partially magnetized the slave medium.

As described above, it is found out that when the perpendicular magnetization film, which is required in the magnetic recording media, is used as the magnetic layer of the master carrier, favorable characteristics are not obtained.

United States Patent No. 7218465B1 proposes the configuration of the master carrier in which the permanent magnetization film with perpendicular magnetic anisotropy is buried in a concave portion, but with the technical content described in United States Patent No. 7218465B1, transfer of a short bit cannot be realized. As the reason of it, first of all, United States Patent No. 7218465B1 does not describe the viewpoint of the perpendicular magnetic anisotropic film with what property being effective. As the magnetic properties, the conditions of saturation magnetization Bsat≥about 0.5 T, magnetic permeabilityµ≥about 5 are described (column 4, lines 58 to 60 of United States Patent No. 7218465B1), but it is already described that with only the condition of Bsat≥about 0.5 T, transfer cannot be performed sufficiently favorably due to a demagnetizing field. Further, with regard to the master carrier, larger µ is more preferable, but it is already known that µ≥100 are sufficient, and a new condition is not especially proposed.

Secondarily, United States Patent No. 7218465B1 describes that the material of the magnetic film is selected from Ni, NiFe, CoNiFe, CoSiFe, CoFe and CoFeV, but these materials cannot satisfy the characteristics of the present invention which will be describe later, and favorable transfer characteristics cannot be obtained.

Thirdly, the configuration described in United States Patent No. 7218465B1 has the form in which a magnetic layer 304 is buried in a concave portion of a master carrier 300, and a transfer surface of the master carrier 300 is a plane with respect to a slave. It is a difficult technique to bring such a flat master and a flat slave into tight contact with each other over a large area. Especially in a short bit, the influence of spacing loss becomes large, and therefore, the burying method which makes a contact area large is not suitable.

Further, the master and the slave need to be separated after tight contact. However, since the contact area increases (since the contact area increases to be about twice as large as the concavo-convex type), adhesive force increases, and since the magnetic coupling and a force for binding all the positive and negative bits to the master are about doubled, separation becomes difficult, which is unfavorable in suitability for mass production.

Fourthly, when the slave and the master are separated after transfer, they cannot avoid moving in the disk radius direction. Therefore, in the case of a permanent magnetization film, there arises the problem that the slave undergoes modulation by the magnetic field from the master, and the S/N degrades.

Further, the art described in Japanese Patent Application Laid-Open No. 2003-203325 is not suitable for transfer of a short bit from the following reason. Specifically, Japanese Patent Application Laid-Open No. 2003-203325 is the art of preventing spread of the transfer pattern by reversing the direction of a magnetic flux between the magnetic bits by using a two-layer perpendicular ferromagnetic film as the magnetic layer of the master carrier. However, only the materials with low saturation magnetization Ms are known as the materials which can actually realize the art, and in the disclosure example of Japanese Patent Application Laid-Open No. 2003-203325, the Ms of TbFeCo is 40 emu/cc and the Ms of TbFe is 300 emu/cc, which are extremely small. Accordingly, they are insufficient for being applied to the coercive force Hc≥4000 Oe which is required in the high density media.

Further, the master carrier described in Japanese Patent Application Laid-Open No. 2003-203325 requires two layers of different materials as the magnetic layer, and therefore, fabrication process is complicated. In addition, the entire transfer portion is flat in Japanese Patent Application Laid-Open No. 2003-203325 as the embedded type master carrier (Fig. 22) of United States Patent No. 7218465B1, and therefore, it is also a difficult art as described above to bring the flat master carrier and the flat slave medium into tight contact with each other over the entire slave to the level which enables recording of short bits. Further, as in United States Patent No. 7218465B1, separation of the master carrier and the slave medium is difficult, which is unfavorable in suitability for mass production.

As described above, with the conventionally proposed arts, realization of magnetic transfer of a short bit is difficult.

The present invention is made in view of the above circumstances, and has an object to provide a master carrier capable of generating a high magnetic field which enables transfer of a short bit to a high density medium, and an object to provide a master carrier which can be fabricated by a simple process and has a form which facilitates tight contact with and separation from a slave. Further, the present invention has an object to provide a magnetic transfer method using such a master carrier and a magnetic recording medium fabricated by the method.

In order to attain the above-described object, a master carrier for magnetic transfer according to an aspect of the present invention, for magnetic transfer which is brought into contact with a magnetic recording medium when magnetic information is transferred to the magnetic recording medium, comprises: a transfer portion on which a magnetic layer corresponding to magnetic information for transfer is formed; and a non-transfer portion which forms a concave shape relatively low with respect to the transfer portion having the magnetic layer, wherein the magnetic layer has perpendicular magnetic anisotropy, with residual magnetization Mr of 500 emu/cc or less, and saturation magnetization Ms of 900 emu/cc or more.

As the magnetic material of the magnetic layer, for example, CoPt can be used, and of CoPt, Co₄Pt₁ (at%) is more preferable.

Further, the master carrier for magnetic transfer may further comprise an under layer, under the magnetic layer, which is made of any one of CoCr, Ru, and Pt, or a combination of any of CoCr, Ru, and Pt

Further, as another aspect of the present invention, the magnetic layer of the transfer portion on the master medium for magnetic transfer may be more convex (more specifically, relatively high) than other portions.

Further, the present invention provides a magnetic transfer method using the above described master carrier for magnetic transfer according to the aspects of the present invention. Specifically, a magnetic transfer method according to the present invention comprises: an initial magnetizing step of, using a perpendicular magnetic recording medium with a coercive force Hc of 4000 Oe or more, initially magnetizing the perpendicular magnetic recording medium in a perpendicular direction; a tight contact step of bringing the master carrier for magnetic transfer according to any one of the aspects of the present invention, into tight contact with the perpendicular magnetic recording medium after the initial magnetizing step; and a transfer step of applying a perpendicular magnetic field whose direction is opposite to that of the initial magnetization with the perpendicular magnetic recording medium in tight contact with the master carrier for magnetic transfer, and transferring magnetic information to the perpendicular magnetic recording medium.

By using the master carrier for magnetic transfer or the magnetic transfer method according to any one of the aspects of the present invention, a perpendicular magnetic recording medium in which information such as a servo signal is recorded can be produced.

According to the master carrier for magnetic transfer according to the aspects of the present invention, by the height difference between the transfer portion and non-transfer portion, tighter contact can be ensured in the transfer portion at the time of transfer, and after transfer, the master carrier and the magnetic recording medium (slave medium) can be easily separated. Further, the master carrier for magnetic transfer according to the aspects of the present invention has large saturation magnetization Ms, and therefore, a transfer magnetic field capable of sufficient recording can be applied to a magnetic recording medium with high density and a high coercive force Hc. In addition, the master carrier has small residual magnetization Mr, and therefore, degradation (occurrence of noise) of a transfer signal due to a residual magnetic field can be suppressed when the master carrier is separated after transfer.

As above, according to the aspects of the present invention, transfer with high density and high performance (favorable S/N) can be realized. Further, the structure of the master carrier for magnetic transfer is simple as compared with the configuration of Japanese Patent Application Laid-Open No. 2003-203325, and can be easily fabricated.

### BRIEF DESCRIPTION OF THE DRAWINGS

Figs. 1A to 1C are schematic views of steps of a magnetic transfer method in an embodiment of the present invention;
Fig. 2 is a schematic sectional view of a slave disk;
Fig. 3 is a schematic sectional view showing a magnetizing direction of a magnetic layer (recording layer) after an initial magnetizing step;
Figs. 4A and 4B are sectional views showing mode examples of a master disk;
Fig. 5 is a graph showing the relationship of an applied magnetic field and magnetization;
Fig. 6 is a graph showing the calculation result of the magnetic field occurring at the time of transfer;
Fig. 7 is a graph showing magnetic field distribution in a transition region;
Fig. 8 is an explanatory diagram of the position on the master shown by the horizontal axis of Fig. 7;
Figs. 9A and 9B are explanatory views showing the state in which the master disk and the slave disk are displaced in an in-plane direction when the master disk is separated from the slave disk;
Fig. 10A and 10B are explanatory views showing the state in which the master disk and the slave disk are displaced in the in-plane direction when the master disk is separated from the slave disk;
Fig. 11 is a diagram showing M-H characteristics of the magnetic film used for the slave disk;
Fig. 12 is a graph showing the relationship of the distance from the master disk and the generated magnetic field;
Fig. 13 is a diagram showing the M-H characteristics of Co₄Pt₁ (at%) which is applied to a master magnetic layer;
Figs. 14A to 14J are process charts showing the manufacturing method of the master disk;
Fig. 15 is a plane view of the master disk;
Fig. 16 is an explanatory view of a magnetic transfer step;
Fig. 17 is a schematic configuration diagram of a magnetic field applying device used for the magnetic transfer step;
Fig. 18 is a schematic sectional view showing a magnetizing direction of the magnetic layer after the magnetic transfer step;
Fig. 19 is an explanatory diagram of a reproduction signal waveform;
Fig. 20 is an explanatory diagram of a reproduction signal waveform;
Fig. 21 is a graph showing the relationship of a bit length and a magnetization difference usable for transfer;
Fig. 22 is a graph showing the relationship of an applied magnetic field and magnetization;
Fig. 23 is a diagram showing the M-H characteristics of the magnetic film used for the salve disk; and
Fig. 24 is a sectional view showing the form of the conventional embedded type master carrier.

### DETAILED DESCRIPTION OF THE PREFERRED EMBODIMENTS

Hereinafter, a preferred embodiment of the present invention will be described in detail with reference to the attached drawings.

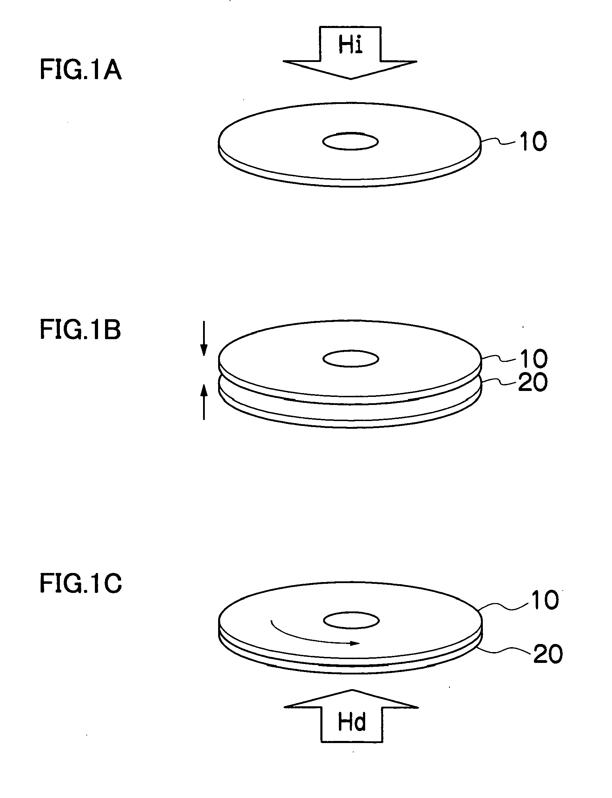

First, a magnetic transfer technique of perpendicular magnetic recording will be roughly described by using Figs. 1A to 1C. Figs. 1A to 1C are schematic views showing steps of a magnetic transfer method of perpendicular magnetic recording. In the drawings, reference numeral 10 designates a slave disk as a magnetic disk for undergoing transfer (corresponding to "perpendicular magnetic recording medium"), and reference numeral 20 designates a master disk as a master carrier.

First, as shown in Fig. 1A, a direct-current magnetic field (Hi) in the perpendicular direction is applied to the slave disk 10 to perform initial magnetization (initial magnetizing step), after which, as shown in Fig. 1B, the master disk 20 and the slave disk 10 are brought into tight contact with each other (tight contact step), and with both the disks 10 and 20 in tight contact, by applying a magnetic field (Hd) in an opposite direction to that at the time of initial magnetization, magnetic transfer is carried out as shown in Fig. 1C (transfer step).

### [Description of the magnetic disk (slave disk) for transfer]

The slave disk 10 used in the embodiment is such that a magnetic layer constituted of a perpendicular magnetization film is formed on one surface or both surfaces of a disk-shaped substrate, and a high density hard disk or the like can be cited in concrete.

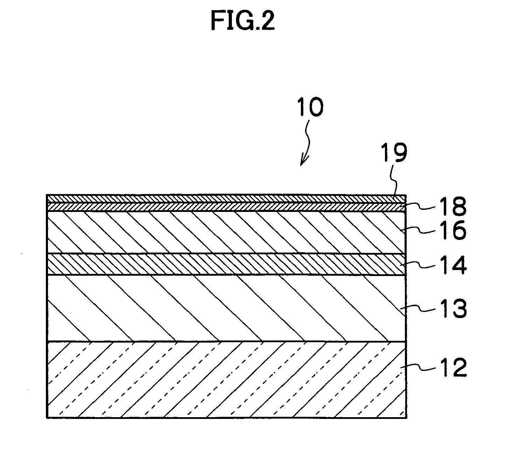

Fig. 2 shows a schematic sectional view of the slave disk 10. As shown in Fig. 2, the slave disk 10 is constituted of a structure in which a soft magnetic layer (soft magnetic under layer; SUL) 13, a nonmagnetic layer (intermediate layer) 14, and a magnetic layer (perpendicular magnetic recording layer) 16 are sequentially stacked in layer on a nonmagnetic substrate 12 of glass or the like, and the top of the magnetic layer 16 is further covered with a protection layer 18 and a lubricant layer 19. Here, an example in which the magnetic layer 16 is formed on one surface of the substrate 12 is shown, but the mode in which the magnetic layers are formed on both front and back surfaces of the substrate 12 can be adopted.

The disk-shaped substrate 12 comprises a nonmagnetic material such as glass and Al (aluminum). After the soft magnetic layer 13 is formed on the substrate 12, the nonmagnetic layer 14 and the magnetic layer 16 are formed.

The soft magnetic layer 13 is useful for stabilizing the perpendicular magnetization state of the magnetic layer 16, and enhancing sensitivity at the time of recording and reproducing. As the materials used for the soft magnetic layer 13, soft magnetic materials such as CoZrNb, FeTaC, FeZrN, an FeSi alloy, an FeAl alloy, an FeNi alloy such as permalloy, and an FeCo alloy such as permendur are preferable. The soft magnetic layer 13 is provided with magnetic anisotropy in a radius direction (radially) from the center of the disk to the circumference.

The thickness of the soft magnetic layer 13 is preferably 50 nm to 2000 nm, and more preferably, 80 nm to 400 nm.

The nonmagnetic layer 14 is provided for the reason of increasing the magnetic anisotropy in the perpendicular direction of the magnetic layer 16 which is formed later and the like. As the materials used for the nonmagnetic layer 14, Ti (titanium), Cr (chromium), CrTi, CoCr, CrTa, CrMo, NiAl, Ru (ruthenium), Pd (palladium), Ta, Pt and the like are preferable. The nonmagnetic layer 14 is formed by depositing the above described material by a sputtering method. The thickness of the nonmagnetic layer 14 is preferably 10 nm to 150 nm, and more preferably 20 nm to 80 nm.

The magnetic layer 16 is formed from a perpendicular magnetization film (the easy axis of magnetization in the magnetic film is mainly oriented perpendicularly to the substrate), and information is recorded in the magnetic layer 16. As the material used for the magnetic layer 16, Co (cobalt), Co alloys (CoPtCr, CoCr, CoPtCrTa, CoPtCrNbTa, CoCrB, CoNi and the like), Co alloy-SiO2, Co alloy-TiO2 Fe, Fe alloys (FeCo, FePt, FeCoNi and the like) and the like are preferable. The materials have large magnetic flux density, and perpendicular magnetic anisotropy by adjusting the deposition conditions and compositions. The magnetic layer 16 is formed by depositing the above described material by a sputtering method. The thickness of the magnetic layer 16 is preferably 10 nm to 500 nm, and more preferably 20 nm to 200 nm.

In the present embodiment, a disk-shaped glass substrate of an outside diameter of 65 mm is used as the substrate 12 of the slave disk 10, and the glass substrate is placed in the chamber of a sputtering device. After decompression to 1.33×10⁻⁵ Pa(1.0×10⁻⁷ Torr), Ar (argon) gas is introduced into the chamber. By using a CoZrNb target in the chamber and setting the temperature of the substrate in the chamber at a room temperature, an SUL first layer of a thickness of 80 nm is deposited by sputtering. Next, on the SUL first layer, an Ru layer of 0.8 nm is deposited by sputtering by using an Ru target in the chamber. Further, on the Ru layer, an SUL second layer of a thickness of 80 nm is deposited by sputtering by using the CoZrNb target. The SUL thus deposited by sputtering is heated and then cooled to the room temperature, with a magnetic field of 50 Oe or more applied in the radius direction.

Next, sputtering deposition is performed by using the Ru target and causing discharge under the condition of the substrate temperature at a room temperature. Thereby, the nonmagnetic layer 14 constituted of CrTi is deposited to 60 nm.

Thereafter, Ar gas is introduced similarly to the above description, and by using the CoCrPt target in the same chamber, discharge is caused under the condition of the substrate temperature at the same room temperature, whereby deposition by sputtering is performed. Thereby, the magnetic layer 16 of the granular structure constituted of CoCrPt-SiO₂ is deposited to 25 nm.

By the above process, the magnetic disk for transfer (slave disk) 10 in which the soft magnetic layer, the nonmagnetic layer and the magnetic layer are deposited on the glass substrate is produced.

### [Initial magnetization of the slave disk]

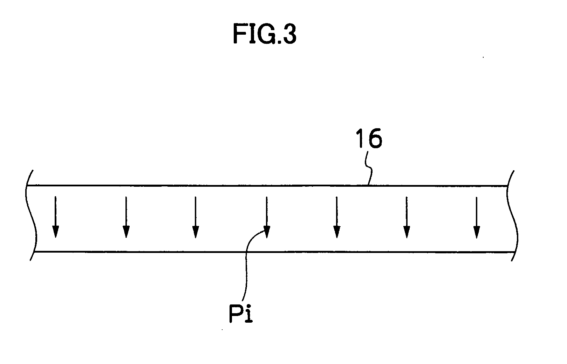

Next, initial magnetization of the slave disk 10 which is formed is performed. As described in Fig. 1A, initial magnetization (direct-current magnetization) of the slave disk 10 is performed by generating the initializing magnetic field Hi by a device (magnetic field applying device not illustrated) which can apply a direct-current magnetic field perpendicularly to the surface of the slave disk 10. More specifically, initial magnetization is performed by generating a magnetic field with strength of the coercive force Hc of the slave disk 10 or more as the initializing magnetic field Hi. By the initial magnetizing step, the magnetic layer 16 of the slave disk 10 is initially magnetized Pi in one direction perpendicular to the disk surface, as shown in Fig. 3. The initial magnetizing step may be carried out by relatively rotating the slave disk 10 with respect to the magnetic field applying device.

### [Form of the master disk]

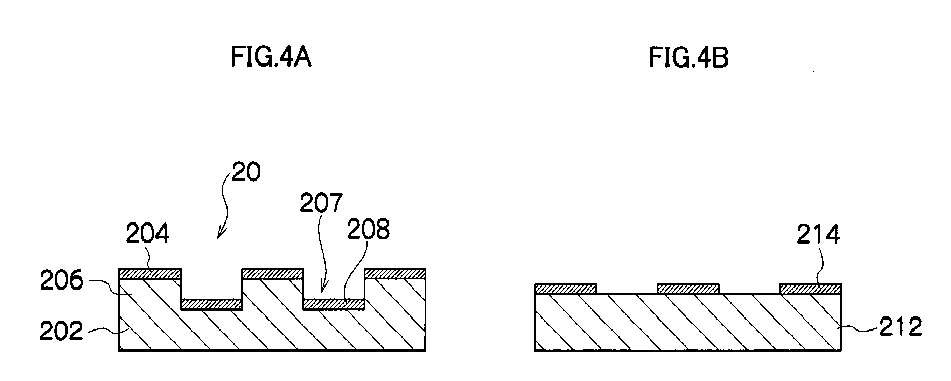

Next, the master disk 20 which is a master carrier will be described. Figs. 4A and 4B show form examples of the master disk 20. As the shape of the master disk 20, the form in which a magnetic layer 204 is formed on a concavo-convex surface of a base material 202 as shown in Fig. 4A, or the form in which a magnetic layer 214 is formed on only bit portions (portions where the initial magnetization is reversed, and correspond to "transfer portions") corresponding to transfer signals in the surface of a flat base material 212 as shown in Fig. 4B is preferable.

In the form of Fig. 4A, the magnetic layers 204 formed on top surfaces of convex portions 206 of the base material 202 become bit portions (portions where the initial magnetization is reversed) corresponding to transfer signals. In Fig. 4A, magnetic layers 208 are also formed on concave portions 207 (corresponding to "non-transfer portions") of the base material 202, but the magnetic layers 208 may be omitted for the concave portions 207. Considering easiness of fabrication, the constitution in which the magnetic layers 204 and 208 are provided on the surfaces of the convex portions 206 and the concave portions 207 as in Fig. 4A is easier than the constitution in which the magnetic layers 204 are selectively provided on only the convex portions 206.

In the present description, the term "bit is short" or "short bit" means that the width of the magnetic layer 204 on the convex portion 206 is short as shown in the example of Fig. 4A, and the width of the magnetic layer 214 is small as shown in the example of Fig. 4B.

In both forms of Figs. 4A and 4B, the places provided with the magnetic layers 204 and 214 of the portions (bit portions) corresponding to the transfer signals become the highest positions in the master disk 20 (except for the protection layer, lubricant layer and the like), and the place other than the bit portions is relatively lower than the magnetic layers 204 and 214 of the bit portions. Specifically, the master disk 20 is in the shape where the magnetic layers 204 or 214 of the bit portions are the uppermost layers (however, protection layers and lubricant layers may be further provided on the magnetic layer 204 and 214), and as a result that the non-bit portions form relatively low concave portions, the disk surface has the concavo-convex surface.

In the following description, an example of adopting the form of Fig. 4A is mainly described, but the description can be similarly applied to the form of Fig. 4B.

### [Magnetic layer of the master disk]

Desirable magnetic properties as the magnetic film 204 of the master disk 20 are shown in Table 1. In Table 1, the properties of the perpendicular magnetic recording film used for the recording layer of the slave disk 10 are shown in contrast for comparison.

**[Table 1]**

| | PERPENDICULAR MAGNETIC FILM FOR MASTER | PERPENDICULAR MAGNETIC FILM FOR MAGNETIC RECORDING | OPERATIONAL EFFECT |
|---|---|---|---|
| RESIDUAL MAGNETIZATION Mr | INDISPENSABLY SMALL (≤500 emu/cc) | INDISPENSABLY LARGE | LARGE NOISE WHEN LARGE |
| SQUARENESS RATIO SQ | SMALL (≤0. 6) | 1 | |
| SATURATION MAGNETIZATION Ms | INDISPENSABLY LARGE (≥900 emu/cc) | SMALL IS ACCEPTABLE (ABOUT 400 emu/cc) | WHEN SMALL, TRANSFER MAGNETIC FIELD IS INSUFFICIENT |
| Hs (MAGNETIC FIELD TO BE Ms) | INDISPENSABLY SMALL | LARGE IS ACCEPTABLE | WHEN LARGE, RESOLUTION IS INSUFFICIENT |
| REVERSE MAGNETIC FIELD DOMAIN NUCLEATION MAGNETIC FIELD Hn | SMALL IN THE FIRST QUADRANT | THE SECOND QUADRANT | IN THE SECOND QUADRANT, WHEN Mr IS LARGE, NOISE IS LARGE |
| ANISOTROPY CONSTANT Ku | SMALL IS ACCEPTABLE | INDISPENSABLY LARGE PREFERABLY≥5*10⁶ (erg/cc) | |
| COERCIVE FORCE Hc | MIDDLE OR LESS | INDISPENSABLY LARGE PREFERABLY≥4000 Oe | WHEN LARGE, RESOLUTION IS INSUFFICIENT |
| MAGNETIC PERMEABILITY µ | PREFERABLY 100 OR MORE | SMALL IS ACCEPTABLE | |

Hereinafter, appropriateness of the conditions of Table 1 as the magnetic layer of the master carrier will be described.

### [Comparison of the perpendicular magnetic anisotropic film and isotropic film]

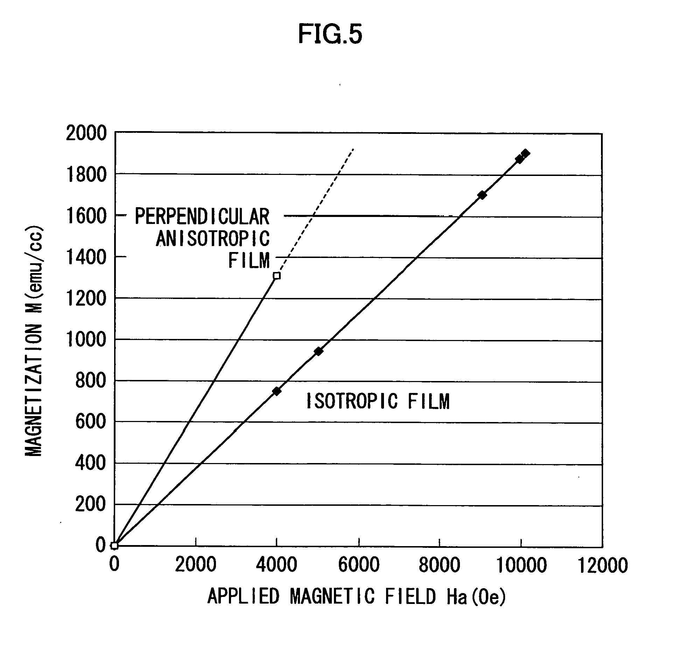

Fig. 5 is a graph showing the relationship of the applied magnetic field and magnetization of the master magnetic layer. Here, as the perpendicular anisotropic film, the magnetic film having the properties of saturation magnetization Ms of 1300 emu/cc and the magnetic field necessary for saturation of 4000 Oe was used, and magnetization with respect to the applied magnetic field was compared with the case of the magnetic film (isotropic film) of the isotropic magnetic property. The shape of the magnetic film was made the same shape as the example described with Fig. 22.

As shown in Fig. 5, in the isotropic film, magnetization when 4000 Oe is applied is less than 800 emu/cc, but in the case of the perpendicular anisotropic film, magnetization reaches 1300 emu/cc (saturation magnetization) when the same 4000 Oe is applied. It is found out that in the perpendicular anisotropic film, the applied magnetic field effectively magnetizes the magnetic layer due to perpendicular magnetic anisotropy. If the perpendicular anisotropic film with the saturation magnetization Ms larger than 1300 emu/cc is used, magnetization advances along the extension line shown by the dotted line in Fig. 5.

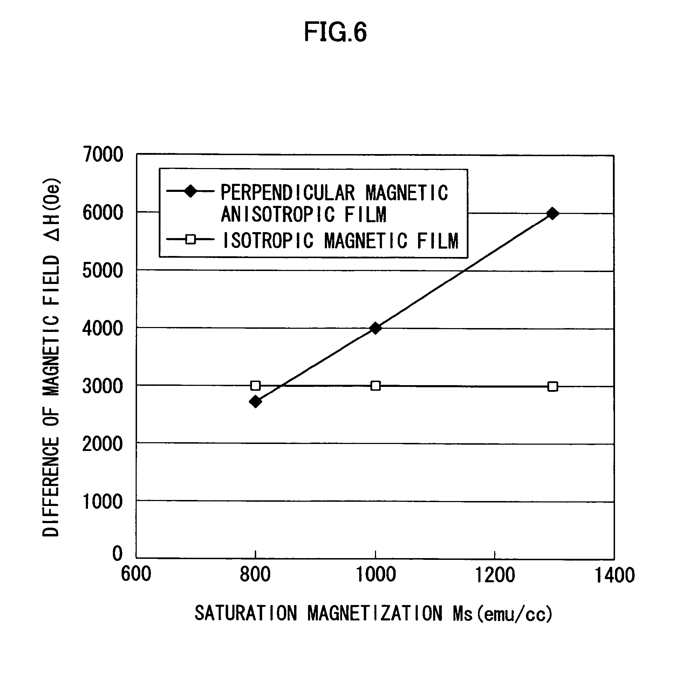

Fig. 6 is the calculation result with attention paid to the difference between the magnetic field of the convex portion and the magnetic field of the concave portion. Specifically, Fig. 6 shows the calculation result of the magnetic field which is generated at the time of transfer at the position 10 nm from the master when the perpendicular anisotropic film is provided by 100 nm on the concavo-convex master (master carrier in the form shown in Fig. 4A), with the bit length set at 100 nm and the length in the radius direction set at 100 nm, and shows in contrast with the calculation result of the isotropic film.

The horizontal axis of Fig. 6 represents the saturation magnetization Ms, and the vertical axis represents a difference (ΔH) of the magnetic fields which is generated at the convex portion and the concave portion at the time of transfer. In order to realize favorable transfer, the concave portion of the master carrier is preferably small so as not to reverse initial magnetization of the slave medium, and the magnetic field at the convex portion is preferably large.

As shown in Fig. 6, in an isotropic film, the magnetic field leaks out to the concave portion, and therefore, even if saturation magnetization is made large, the magnetic field difference ΔH cannot be made larger than a certain value. On the other hand, in a perpendicular anisotropic film, if saturation magnetization is made large, the magnetic field difference ΔH can be made large correspondingly, due to perpendicular magnetic anisotropy. Fig. 6 clearly shows that the effect of using the perpendicular anisotropic film is large in the region where saturation magnetization exceeds 800 emu/cc. The saturation magnetization Ms is desirably set at 900 emu/cc or more.

The effect leads to decrease in the magnetic field of the concave portion, and the magnetic field distribution in the transition region becomes sharp (change of the magnetic field of the convex portion and the magnetic field of the concave portion becomes steep).

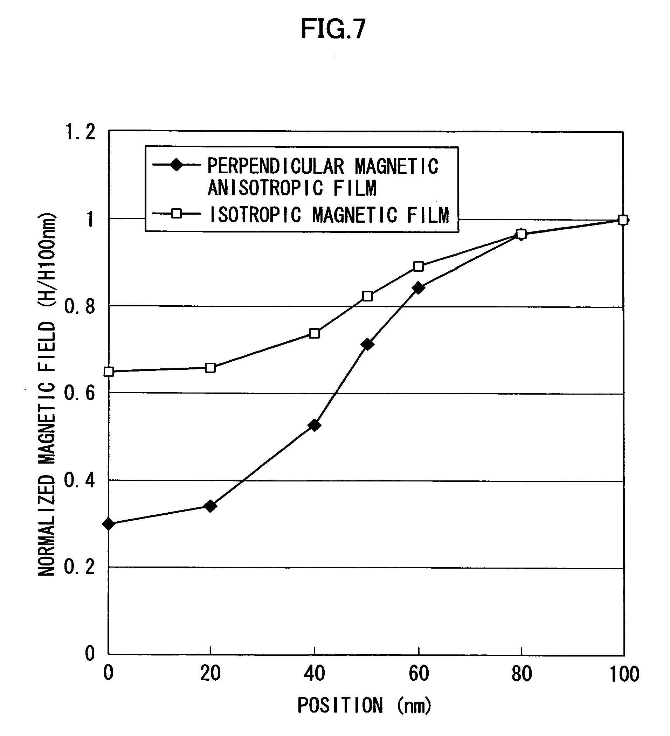

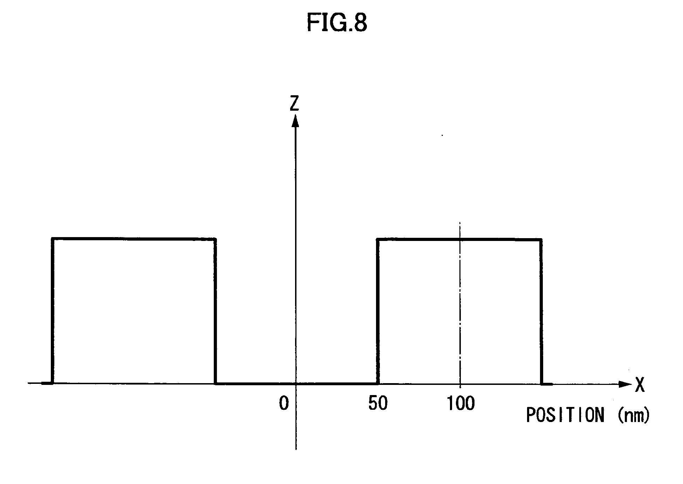

Fig. 7 shows the simulation result of calculating the distribution of the position of the magnetic field when the transfer magnetic field of 4000 Oe is applied to the bit of the magnetic layer having a bit length of 100 nm. The horizontal axis of Fig. 7 represents the position of the in-plane direction (the radius direction or the circumferential direction) of the master disk, and as shown in Fig. 8, the origin of the position (x=0) is at the center of the concave portion. The position of x=50 nm is the boundary of the concave and convex (namely, the border of the convex portion and the concave portion), and x=100 nm is at the center of the convex portion.

The vertical axis of Fig. 7 is the magnetic field (normalized magnetic field) which is normalized by the magnetic field of the central position (x=100 nm) of the convex portion. As shown in Fig. 7, in the bit using the perpendicular magnetic anisotropic film, the magnetic field in the transition region is steep as compared with the bit using the isotropic magnetic film. For example, when the gradients of the curves at x=50 nm are compared, the gradient of the perpendicular magnetic anisotropic film is about double the gradient of the isotropic magnetic film, and by using the perpendicular anisotropic film, the magnetic field having about double the steepness is obtained. The magnetic field with such sharp magnetic field distribution can be applied to the slave disk 10 at the time of transfer, recording of the signal to the slave disk 10 becomes sharp.

### [Residual magnetization Mr]

The residual magnetization Mr of the master magnetic layer has desirably a small value. If the residual magnetization Mr is larger than a certain value, a magnetic field occurs from the master disk even after application of the transfer magnetic field is released. Therefore, unnecessary transfer occurs when the master disk 20 is separated from the slave disk 10, and this becomes noise of the signal.

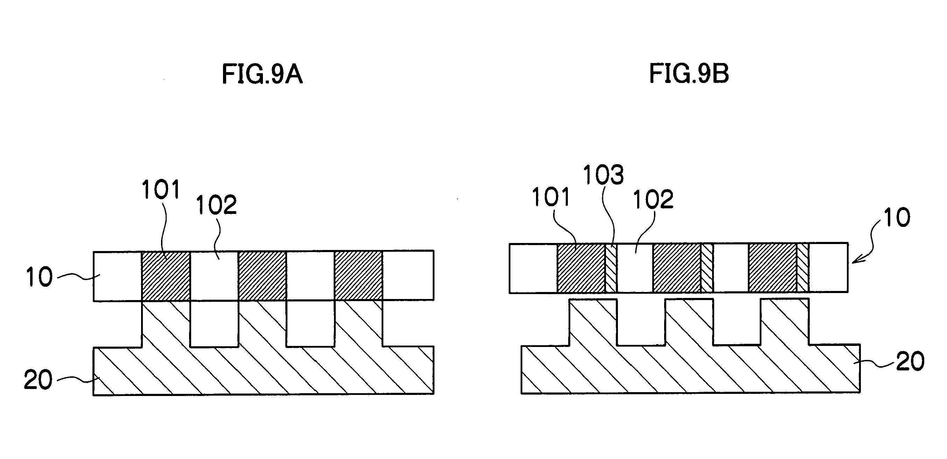

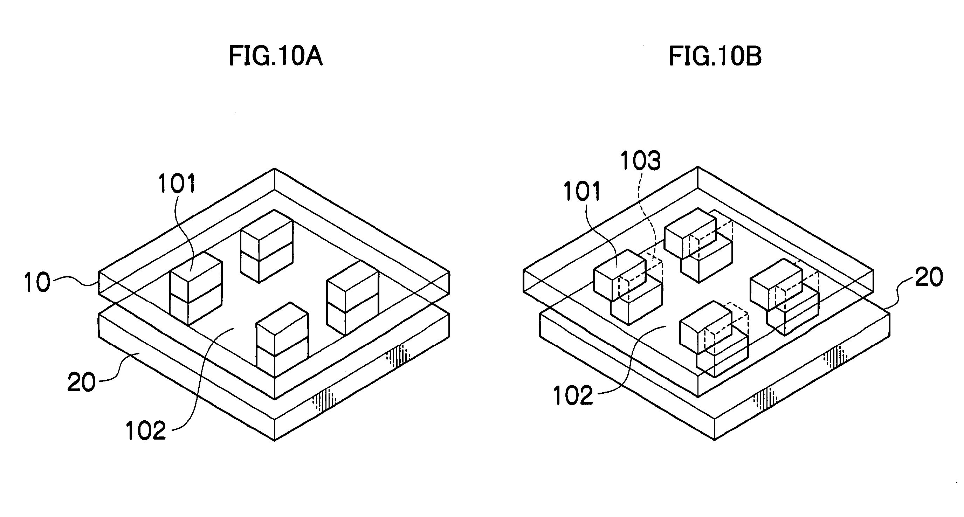

Figs. 9A, 9B, 10A and 10B schematically show the state. Figs. 9A and 10A show the tight contact state at the time of transfer, and shows that magnetization of the slave disk 10 at the portions (reference numeral 101) in contact with the master convex portions is in the opposite direction to the direction of the initial magnetization of the portions (reference numeral 102) corresponding to the concave portions.

After the transfer step shown in Figs. 9A and 10A (after application of the transfer magnetic field is released), when the master disk 20 is separated from the slave disk 10, deviation (or slippage) in the in-plane direction can occur.

The slave magnetization state of the region (reference numeral 102) except for the portions in contact with the convex portions has to keep the state of initial magnetization, but when the residual magnetization Mr of the master magnetic layer is high, the magnetic field still occurs from the master magnetic layer even after the transfer magnetic field is eliminated, a part (reference numeral 103) of the portions 102 corresponding to the concave portions receives the influence of the residual magnetic field by movement in the in-plane direction at the time of separation of the master, whereby the state of the initial magnetization degrades.

From the viewpoint of avoiding such a problem, the residual magnetization Mr of the master magnetic layer is desirably set at 500 emu/cc or less. The reason of this will be described hereinafter.

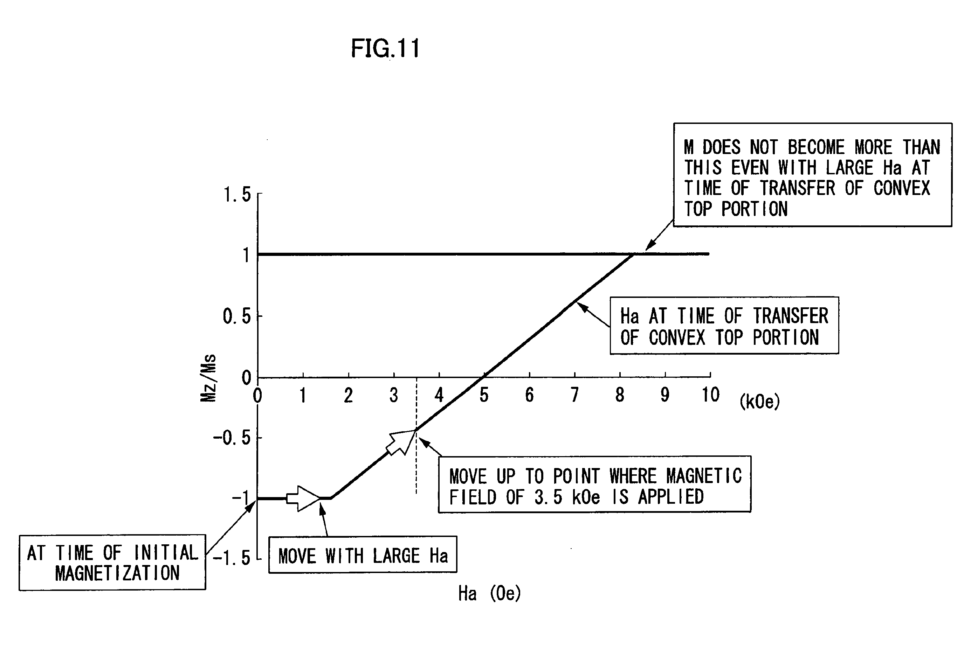

Fig. 11 is the M-H curve (similarly to Fig. 23) of a typical magnetic layer used for the slave disk 10. The horizontal axis in Fig. 11 represents an applied magnetic field, and the vertical axis represents magnetization normalized by the saturation magnetization Ms.

According to Fig. 11, by the step of initial magnetization, magnetization is performed to normalized magnetization= -1. When the transfer magnetic field Ha is applied in this state, the magnetic field increases on the master convex portions, and the state moves along the thick arrows of Fig. 11. As described with Fig. 23, ΔMz/Ms is ideally "2", but with the bit length of 50 nm, ΔMz/Ms is about 0.8.

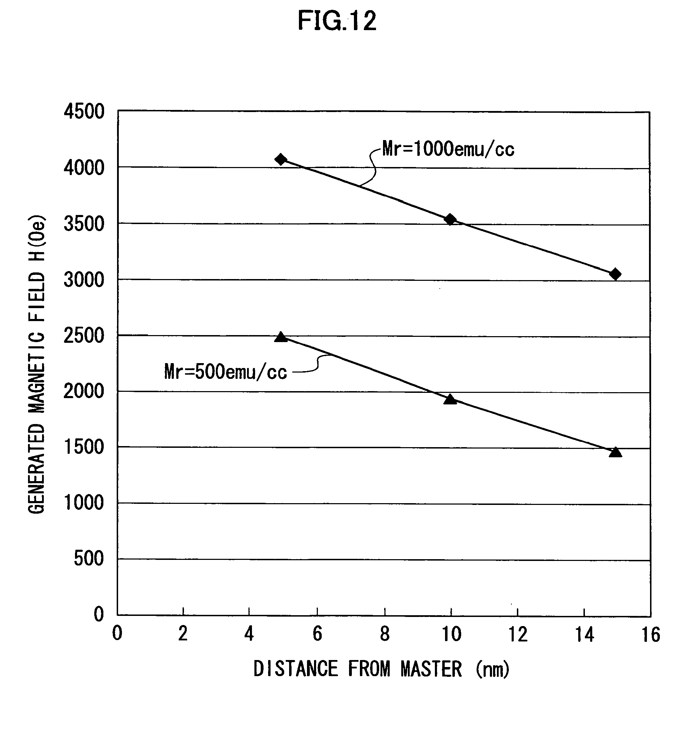

Fig. 12 shows the magnetic field (by the residual magnetization) on the master when the applied magnetic field is set at zero after transfer in the master disk 20 having the magnetic layer with perpendicular magnetic anisotropy. Fig. 12 shows the magnetic field by the perpendicular magnetic anisotropic film with the residual magnetization Mr=1000 emu/cc, and the magnetic field by the perpendicular magnetic anisotropic film with the residual magnetization Mr=500 emu/cc.

The horizontal axis of Fig. 12 represents the distance from the master surface, and the vertical axis represents the generated magnetic field. Fig. 12 shows how much magnetic field remains in the master magnetic layer when the transfer magnetic field is removed. The magnetic field tends to attenuate as it is at a longer distance from the master surface. Paying attention to the generated magnetic field in the position at a distance of 10 nm from the master surface, the generated magnetic field from the master of the perpendicular anisotropic film of the residual magnetization Mr=1000 emu/cc (SQ=1) is about 3.5 kOe, whereas the generated magnetic field from the master of the perpendicular anisotropic film of the residual magnetization Mr=500 emu/cc (SQ=0.5) is about 2 kOe.

The influence such that a residual magnetic field has on the slave disk after transfer will be discussed. In the slave disk of the magnetic layer having the characteristics of the M-H curve shown in Fig. 11, if magnetization of the slave magnetic layer is fully (by utilizing the ability of the magnetic layer to the maximum) recorded by the initial magnetizing step and the transfer step, the regions (portions corresponding to the master concave portions, hereinafter called "non-transfer portions") of the slave which are not in contact with the master magnetic layer (bit potions) maintain the state of the initial magnetization in Fig. 11, and the ΔMz/Ms of the non-transfer portion is "-1".

When the master disk 20 is assumed to move by several tens nm in the in-plane direction when the master disk 20 is separated from the slave disk 10 after the transfer magnetic field is made zero after the magnetic transfer step, in the case of the master of the perpendicular anisotropic film of the residual magnetization Mr=1000 emu/cc (SQ=1), the value of the initial magnetization of the slave becomes "-0.5" from "-1" from the M-H curve in Fig. 11 by the magnetic field of about 3.5 kOe which is generated from the convex portions, and the magnetization of the slave degrades by 50%. When recording by fully utilizing the ability of the slave magnetic layer is not performed from the beginning, and the initial magnetization already decreases from "-1", influence of the degradation becomes larger.

On the other hand, in the case of the master of the perpendicular anisotropic film of the residual magnetization Mr=500 emu/cc (SQ=0.5), the magnetic field which is generated from the convex portions becomes smaller than 2 kOe (Fig. 12). According to the M-H curve of Fig. 11, magnetization increases from about the point at which the external magnetic field Ha exceeds 2 kOe from the state of the initial magnetization, and therefore, change in magnetization by the external magnetic field lower than 2 kOe is small enough to be ignored.

Therefore, in the case of the perpendicular anisotropic film with the residual magnetization Mr=500 emu/cc (SQ=0.5), even if in-plane movement occurs at the time of separation of the master, influence by the generated magnetic field (magnetic field smaller than 2 kOe) hardly exists, and since the value of the initial magnetization of the slave is substantially the same value as that at the time of transfer from the M-H curve in Fig. 11, degradation of the magnetization state hardly occurs.

In the case of the perpendicular anisotropic films with the residual magnetization Mr smaller than 500 emu/cc, the graphs of them are located at the lower side than the graph of that of Mr=500 emu/cc in Fig. 12, and therefore, the influence by the residual magnetic field hardly occurs as in the case of the perpendicular anisotropic film with Mr=500 emu/cc.

In the actual fabrication process, movement of about 100 nm in the disk radius direction is unavoidable when the master disk 20 and the slave disk 10 are separated after the magnetic transfer step, and therefore, the condition of setting the residual magnetization Mr of the master magnetic layer at 500 emu/cc or less is important.

The validity of evaluating the influence of the residual magnetic field in the position 10 nm from the master surface is for the following reason. Specifically, in the film constitution of the slave disk 10 (see Fig. 2), the protection layer 18 and the lubricant layer 19 exist on the magnetic layer 16. For example, the thickness of the carbon film to be the protection layer 18 is assumed to be about 3 nm, and the film thickness of the lubricant layer 19 is assumed to be 1 to 2 nm. Meanwhile, with regard to the master disk 20, the protection layer (carbon film or the like) of about 5 nm is frequently provided on the magnetic layer.

Specifically, even in the tight contact state of the master disk 20 and the slave disk 10 at the time of transfer, the nonmagnetic film such as the protection layer is interposed between the magnetic layer of the master disk 20 and the magnetic layer 16 of the slave disk 10, and the distance of about 10 nm exists between the magnetic layers. The distance may be actually longer than this, but as the distance between the magnetic layers becomes longer, the magnetic field becomes weaker, and therefore, consideration of the spacing position of 10 nm is sufficient.

### [Anisotropy constant Ku]

Concerning an anisotropy constant Ku (erg/cm³), the perpendicular magnetic recording media are considered to need a value of KuV/(kT) of 60 or more to allow record by magnetization to remain. Here, V represents a magnetization reversal volume (cm³), k represents a Boltzman constant (1.38×10⁻¹⁶ erg/deg), and T represents a temperature.

Since the magnetization reversal volume V becomes small with high densification, in the case of the perpendicular magnetic recording media, a material with a large anisotropy constant Ku is indispensable.

On the other hand, with regard to the master magnetic layer, recording of information is determined by the pattern shape of the magnetic layer, and it is desirable that a magnetic pattern occurs only at the time of transfer (at the time of application of a magnetic field for recording) and the magnetic pattern disappears after the transfer (when application of the magnetic field for recording is released).

Accordingly, the anisotropy constant Ku of the master magnetic layer may be small. In this point, the magnetic material for the perpendicular magnetic recording media and the magnetic material for the master carrier differ greatly.

### [Reverse domain nucleation magnetic field Hn]

The reverse domain nucleation magnetic field Hn of the master magnetic layer preferably becomes an applied magnetic field or less since the saturation magnetization Ms of the master magnetic layer can be effectively utilized. The applied magnetic field does not usually exceed the coercive force Hc of the magnetic layer of the slave disk 10, and therefore, Hn of the master magnetic layer is set at Hc of the slave magnetic layer or less (the master magnetic layer Hn≤slave magnetic layer Hc).

### [Coercive force Hc]

When the coercive force Hc of the master magnetic layer is too large, the master magnetic layer is not magnetized with an applied magnetic field. Further, magnetic transfer cannot be performed after transfer. Application of a large transfer magnetic field has an adverse effect of causing a magnetic field to the concave portions. Accordingly, the coercive force Hc of the master magnetic layer is preferably set at 2000 Oe or less, and more preferably at 500 Oe or less.

As described above, according to the master disk 20 using the perpendicular magnetization film for the master which satisfies the magnetic properties shown in Table 1, there are provided the advantage of enabling transfer with a favorable S/N in the four senses, because (1) the transfer magnetic field of the convex portions (transfer portions) which are in contact the slave disk 10 increases, (2) the magnetic field of the concave portions (non-transfer portions) decreases since a demagnetizing field does not exist, as a result (3) the magnetic field distribution in the transition region becomes sharp, and further (4) transfer by residual magnetization of the master disk 20 does not occur after transfer.

### [Material examples]

As the material of the master magnetic layer which satisfies the magnetic properties organized in Table 1, for example, CoPt is preferable, and an example of more preferable Co₄Pt₁ (at%) is described in Table 1.

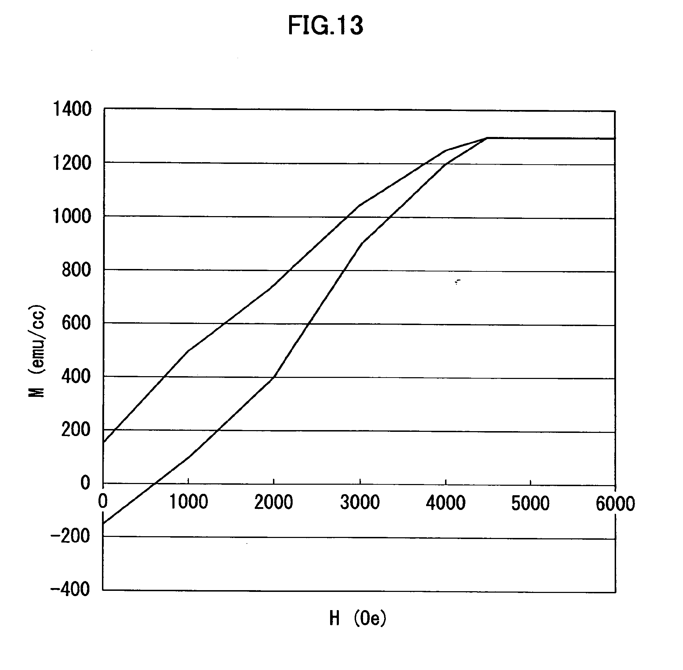

Fig. 13 shows the M-H curve (only the first quadrant) of Co₄Pt₁ (at%). The material has the saturation magnetization Ms=1300 emu/cc, the residual magnetization Mr=170 emu/cc and the coercive force Hc=600 Oe.

Naturally, when the present invention is carried out, the material is not limited to the above material, and the other materials may be used if only they satisfy the aforementioned required physical property values.

Further, an under layer may exist under the magnetic layer in the master disk 20. As the material of the under layer, for example, Pt, Ru and CoCr are preferable, and CoCr with Cr of 25 at% or more, Pt and Ru are more preferable. Any one of these materials or two or more of these materials may be combined. The thickness of the under layer is preferably 0.5 to 30 nm, and more preferably is 1 to 10 nm.

### [Surface shape of the master disk]

As described in Fig. 22, a so-called embedded type master has the disadvantage that tight contact tends to be insufficient due to flatness of the surface to be in contact with the slave. Therefore, the shape of the master disk 20 is preferably a shape in which the non-transfer portions are relatively low concave portions with respect to the magnetic layers 204 and 214 of the transfer portions (portions which reverse magnetization of the slave in transfer).

When the conventional isotropic magnetic film is used as the magnetic layer in the concavo-convex master carrier, a large aspect ratio of the bit (ratio of the size in the direction of down track and the size of the depth) needs to be taken. This is for the purpose of concentrating the applied magnetic field at the time of transfer on the convex portions as effectively as possible due to the demagnetizing magnetic field.

However, when a large aspect ratio is taken, the convex portion sometimes breaks at the time of fabrication of the concavo-convex master carrier, for example, when the master is peeled from the original plate, and at the time of duplication, and a defective occurs. When the aspect ratio exceeds one, the defective ratio abruptly increases.

On the other hand, when the magnetic film having perpendicular magnetic anisotropy according to the present invention is provided, a demagnetizing magnetic field does not have to be worried about. Therefore, the aspect ratio may be small, and therefore, production yield is dramatically enhanced.

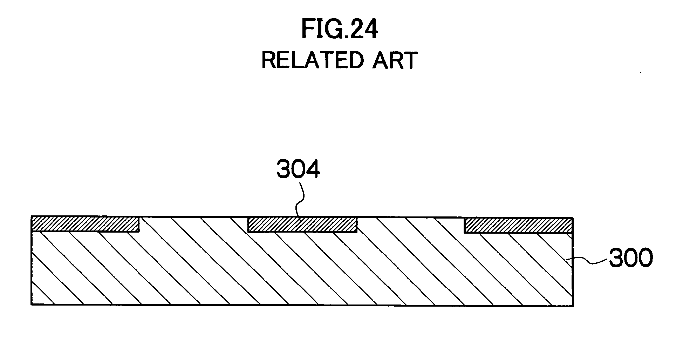

Further, the master disk 20 according to the present invention has a smaller contact area than the embedded type master (Fig. 24). Therefore, when the master and the slave are separated after transfer, they can be separated easily in a short time, and high productivity is provided.

In order to further increase the effect, the portions other than transfer signals are preferably concave. In the case of transfer of a servo signal, the data region is concave. There is the case in which the concave region is so large that when the master and slave are superimposed, the concave portions of the master may deform and overlap the slave portion, and in order to prevent this, a slightly convex portion is preferably formed in the large concave portion.

### [Fabricating method of the master disk 20]

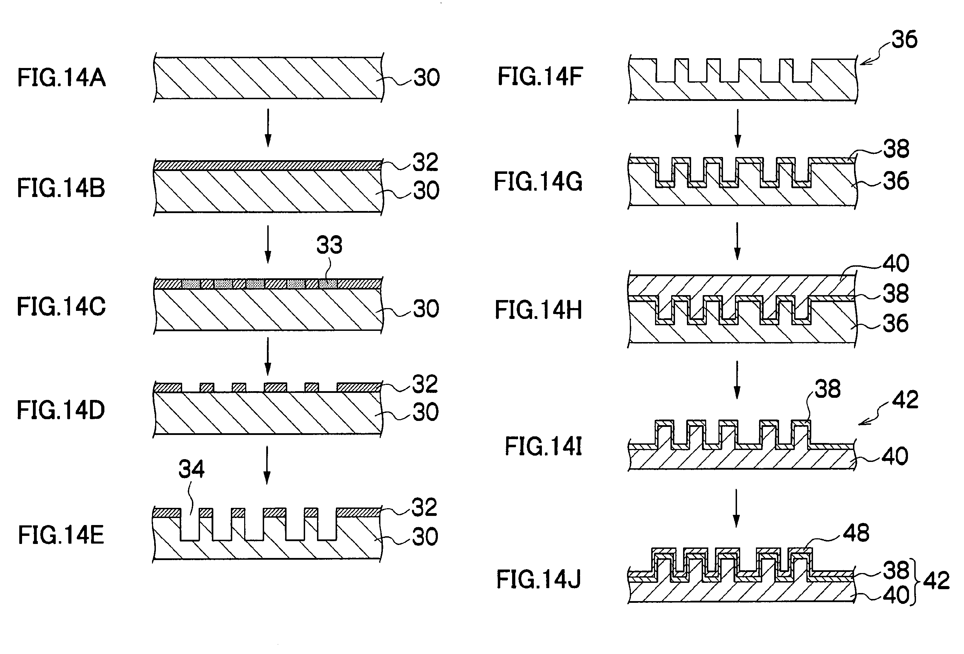

Next, an example of the fabricating method of the master disk 20 will be described with reference to Figs. 14A to 14J. First, as shown in Fig. 14A, an original plate (Si substrate) 30 which is a silicon wafer with a smooth surface is prepared. On the original plate 30, a resist layer 32 is formed by coating an electron beam resist solution by a spin coating method or the like (Fig. 14B), and baking processing (pre-bake) is performed.

Next, the original plate 30 is set on a stage of an electron beam aligner not illustrated including a high precision rotary stage or X-Y stage. While the original plate 30 is rotating, an electron beam which is modulated corresponding to a servo signal is irradiated, and lithography exposure (electron beam lithography) of a predetermined pattern 33 is performed on a substantially entire surface of the resist layer 32, for example, lithography exposure of a pattern corresponding to a servo signal linearly extending in a radius direction from a rotational center to each track is performed for the portion corresponding to each frame on the circumference (Fig. 14C).

Next, as shown in Fig. 14D, the resist layer 32 is subjected to developing processing, and by removing the exposed (lithographed) portion, and a covering layer of a desired thickness by the remaining resist layer 32 is formed. The covering layer becomes a mask for the next step (etching step). As the resist which is coated on the substrate 30, either a positive type or a negative type is usable, but in the positive type and the negative type, the exposed (lithographed) pattern is reversed. After the developing processing, in order to enhance the adhesion strength of the resist layer 32 and the original plate 30, baking processing (post-bake) is performed.

Next, as shown in Fig. 14E, the original plate 30 is removed (etched) by a predetermined depth from the surface from an opening 34 of the resist layer 32. In the etching, in order to minimize undercut (side etch), anisotropic etching is desirable. As such anisotropic etching, RIE; Reactive Ion Etching can be preferably adopted.

Next, as shown in Fig. 14F, the resist layer 32 is removed. As the method for removing the resist layer 32, ashing can be adopted as a dry method, and a removal method by a stripping solution can be adopted as a wet method. By the above ashing step, an original master 36 on which a reversal shape of a desired concavo-convex pattern is formed is produced.

Next, as shown in Fig. 14G, a conductive layer 38 is formed on the surface of the original master 36 to a uniform thickness. As the method for forming the conductive layer 38, various metal depositing method and the like including PVD (Physical Vapor Deposition), CVD (Chemical Vapor Deposition), sputtering, and ion-plating can be applied. Like this, the effect of being capable of uniformly performing electrodeposition of a metal of the subsequent step (electroforming step) if only one layer (reference numeral 38) of the conductive film is formed is obtained. As the conductive layer 38, a film with Ni as a main component is preferable. Such a film having Ni as the main component is easy to form and suitable as the conductive film. The film thickness of the conductive layer 38 is not especially limited, and about several tens nm can be generally adopted.

Next, as shown in Fig. 14H, a metal plate 40 formed by a metal (Ni in this case) of a desired thickness is stacked on the surface of the original master 36 by electroforming (reversal plate forming step). The step is performed by soaking the original master 36 in an electrolytic solution of an electroforming apparatus, setting the original master 36 as an anode, and by passing a current between the anode and a cathode. The concentration and pH of the electrolytic solution, the way of applying the current and the like are required to be carried out under the optimal conditions preventing distortion in the stacked metal plate 40 (specifically, the metal plate to be the master substrate corresponding to the base material 202 described with Fig. 4A).

Subsequently, the original master 36 on which the metal plate 40 is stacked as described above is taken out of the electrolytic solution of the electroforming apparatus, and is soaked in pure water in a release tank (not illustrated).

Next, in the release tank, the metal plate 40 is separated from the original master 36 (separating step), and a master substrate 42 having the concavo-convex pattern reversed from the original master 36 as shown in Fig. 14I is obtained.

Next, as shown in Fig. 14J, a magnetic layer 48 constituted of a soft magnetic film is formed on a concavo-convex surface of the master substrate 42. The material of the magnetic layer 48 satisfies the magnetic properties described in Table 1. More specifically, for example, Co₄Pt₁ (at%) can be cited. The thickness of the magnetic layer 48 is preferably in the range of 10 nm to 320 nm, especially preferably in the range of 20 nm to 300 nm, and more preferably 40 to 100 nm. The magnetic layer 48 is formed by sputtering by using the target of the above described material.

Thereafter, the inside diameter and the outside diameter of the master substrate 42 is stamped to predetermined sizes. By the above process, the master disk 20 having the concavo-convex pattern provided with the magnetic layer 48 (corresponding to the magnetic layer 204 in Fig. 4A) is produced as shown in Fig. 14J. The concavo-convex pattern on the master disk 20 thus formed is produced so that the ratio (Sa/La) of a width Sa in the track direction (circumferential direction) of the concave region (space portion) with respect to a width La in the track direction (circumferential direction) of the convex region (land portion) is 1.3 to 1.9 times, preferably, 1.45 to 1.75 times.

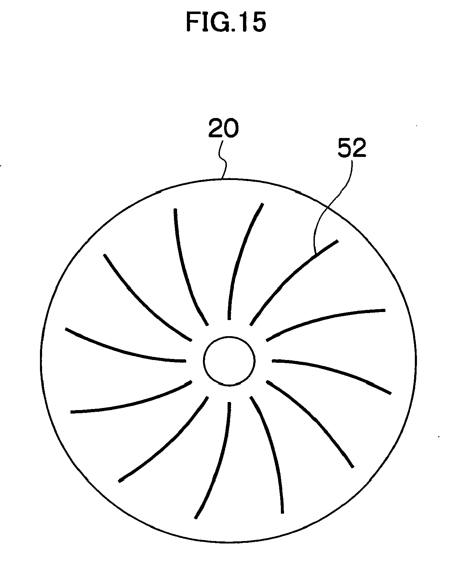

Fig. 15 is a top view of the master disk 20. As shown in Fig. 15, a servo pattern 52 constituted of a concavo-convex pattern is formed on the surface of the master disk 20. Further, though not illustrated in the drawing, a protection film of diamond like carbon or the like may be provided on the magnetic layer 48 on the surface of the master disk 20 (see Fig. 14J), and a lubricant layer may be provided on the protection film.

The master disk 20 is brought into tight contact with the slave disk 10, but the magnetic layer 48 is easily damaged when it is brought into tight contact, and therefore, the protection film and the lubricant layer are provided to prevent the master 20 from being unusable. Further, the lubricant layer has the effect of preventing occurrence of a scar or the like due to friction which occurs when contacting the slave disk 10 to enhance durability.

More specifically, the constitution in which as the protection film, a carbon film of a thickness of 2 to 30 nm is formed, and a lubricant layer is further formed on the carbon film is preferable. Further, in order to reinforce adhesiveness of the magnetic layer 48 and the protection film, an adhesion reinforcing layer of Si or the like is formed on the magnetic layer 48, and the protection film may be formed thereafter.

### [Tight contact step in magnetic transfer]

Next, the step (tight contact step) of superimposing the master disk 20 produced by the above described process and the slave disk 10 after initial magnetizing step on each other as in Fig. 1B to bring them into tight contact with each other is performed.

As shown in Fig. 1B, in the tight contact step, the surface, on which the projected pattern (concavo-convex pattern) is formed, of the master disk 20 and the surface, on which the magnetic layer 16 is formed, of the slave disk 10 are brought into tight contact with a predetermined pressing force.

Cleaning processing (burnishing or the like) for removing microscopic projections or attached dust on the surface is applied to the slave disk 10 by a glide head, a grinder and the like in accordance with necessity, before being brought into tight contact with the master disk 20.

The tight contact step includes the case of bringing the master disk 20 into tight contact with only one surface of the slave disk 10 as shown in Fig. 1B, and the case of bringing the master disks into tight contact with the magnetic disk for transfer with the magnetic layers formed on both surfaces from both surfaces. The latter case has the advantage of being capable of simultaneously transferring both surfaces.

### [Magnetic transfer step]

Next, referring to Fig. 1C, a magnetic transfer step will be described.

For the slave disk 10 and the master disk 20 which are brought into tight contact with each other by the above described tight contact step, the recording magnetic field Hd is generated in the opposite direction to the direction of the initializing magnetic field Hi by a magnetic applying device not illustrated. Magnetic flux occurring by generating the recording magnetic field Hd enters the slave disk 10 and the master disk 20, and thereby, magnetic transfer is performed.

In the present embodiment, the magnitude of the recording magnetic field HD has substantially the same value as that of the Hc of the magnetic material which constitutes the magnetic layer 16 of the slave disk 10.

As for magnetic transfer, the recording magnetic field Hd is applied by the magnetic field applying device while the slave disk 10 and the master disk 20 which are brought into tight contact with each other are rotated by a rotating device not illustrated, and the information constituted of the projected pattern recorded in the master disk 20 is magnetically transferred to the magnetic layer 16 of the slave disk 10. Other than this constitution, the method in which a mechanism for rotating the magnetic field applying device is provided, and the magnetic field applying device is rotated relatively with respect to the slave disk 10 and the master disk 20 may be adopted.

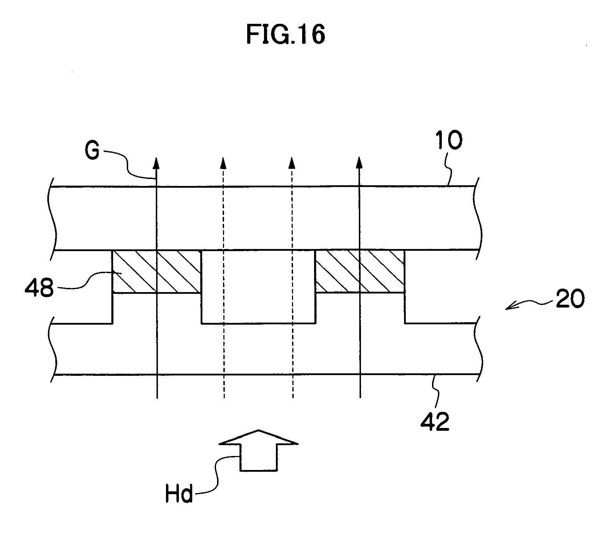

The state of the sections of the slave disk 10 and the master disk 20 in the magnetic transfer step is shown in Fig. 16. As shown in Fig. 16, when the recording magnetic field Hd is applied with the master disk 20 having the concavo-convex pattern in tight contact with the slave disk 10, magnetic fluxes G become strong in the region where the convex regions of the master disk 20 and the slave disk 10 are in contact with each other. By the recording magnetic field Hd, the magnetization directions of the magnetic layer 48 of the master disk 20 are aligned in the direction of the recording magnetic field Hd, and magnetic information is transferred to the magnetic layer 16 of the slave disk 10. Meanwhile, in the concave regions of the master disk 20, the magnetic fluxes G generated by application of the recording magnetic field Hd is weaker as compared with the convex regions. Thus, the magnetization direction of the magnetic layer 16 of the slave disk 10 does not change, and the state of the initial magnetization continues to be kept.

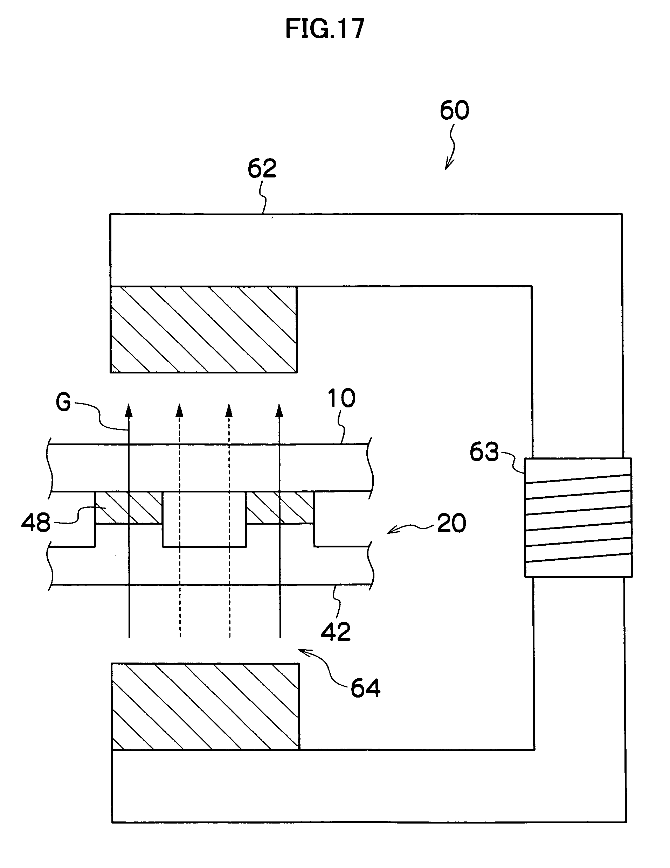

Fig. 17 shows a magnetic transfer apparatus used for magnetic transfer in detail. The magnetic transfer apparatus has a magnetic field applying device 60 constituted of an electromagnet with a coil 63 wound around a core 62, and has a structure in which by passing a current to the coil 63, a magnetic field is generated in a gap 64 perpendicularly to the master disk 20 and the magnetic layer 16 of the slave disk 10 which are in tight contact with each other. The direction of the generated magnetic field can be changed by the direction of the current which is passed to the coil 63. Accordingly, by the magnetic transfer apparatus, initial magnetization of the slave disk 10, and magnetic transfer can be performed.

When magnetic transfer is performed after initial magnetization is performed by the magnetic transfer apparatus, a current in the direction opposite to the direction of the current passed to the coil 63 when initial magnetization is performed is passed to the coil 63 of the magnetic applying device 60. Thereby, a recording magnetic field can be generated in the direction opposite to the magnetizing direction at the time of the initial magnetization. As for magnetic transfer, the recording magnetic field Hd is applied by the magnetic applying device 60 while the slave disk 10 and the master disk 20 which are in tight contact with each other are rotated, and the information constituted of the projected pattern recorded in the master disk 20 is magnetically transferred to the magnetic layer 16 of the slave disk 10. Therefore, a rotating device not illustrated is provided. Other than this constitution, the method in which a mechanism for rotating the magnetic field applying device 60 is provided, and the magnetic field applying device is rotated relatively with respect to the slave disk 10 and the master disk 20 may be adopted.

In the present embodiment, as for the recording magnetic field Hd, magnetic transfer is performed by applying the magnetic field of strength of 60 to 125%, preferably 70 to 115% of the coercive force Hc of the magnetic layer 16 of the slave disk 10 used in the present embodiment.

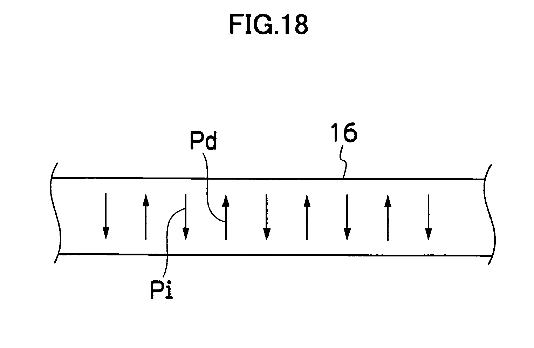

Thereby, the information of the magnetic pattern such as a servo signal is recorded in the magnetic layer 16 of the slave disk 10 as recording magnetization Pd which is magnetization in the direction opposite to the initial magnetization Pi (see Fig. 18).

When the present invention is carried out, the projected pattern formed on the master disk 20 may be a negative pattern opposite to the positive pattern described in Fig. 14J. In this case, the similar magnetization pattern can be magnetically transferred to the magnetic layer 16 of the slave disk 10 by making the direction of the initializing magnetic field Hi and the direction of the recording magnetic field Hd in the opposite directions respectively. Further, in the present embodiment, the magnetic field applying device is described as the electromagnet, but a permanent magnet which similarly generates a magnetic field may be used.

The perpendicular magnetic recording medium fabricated by the method according to the aforementioned embodiment of the present invention is used by being incorporated into a magnetic recording and reproducing device such as a hard disk device, for example. Thereby, a high recording density magnetic recording and reproducing device with high servo accuracy and favorable recording and reproducing characteristics can be obtained.

### [Example]

Experimental conditions: by using the master carrier having the perpendicular magnetic anisotropy according to the present invention, transfer was carried out with 70% of the medium coercive force (Hc), and the reproduced waveform of the medium was measured. For comparison, transfer was performed under the same conditions by using the conventional magnetic layer, and the reproduced waveform of the medium was measured. Table 2 shows the measurement results.

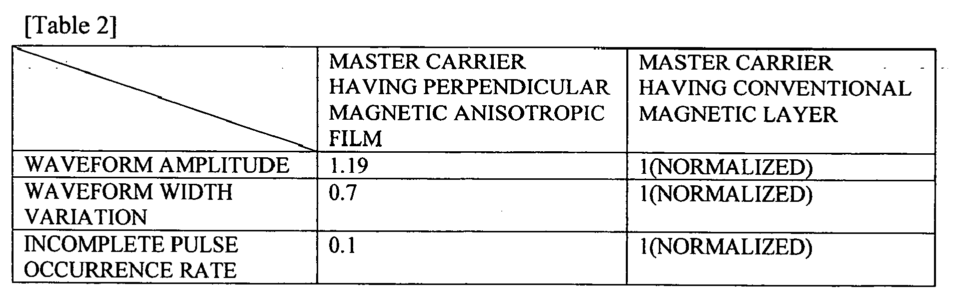

The viewpoints of the measurement evaluation of the reproduced waveforms were "waveform amplitude", "waveform width variation", and "incomplete pulse occurrence rate", and each of the values was normalized by the measurement result of the master carrier having the conventional magnetic layer.

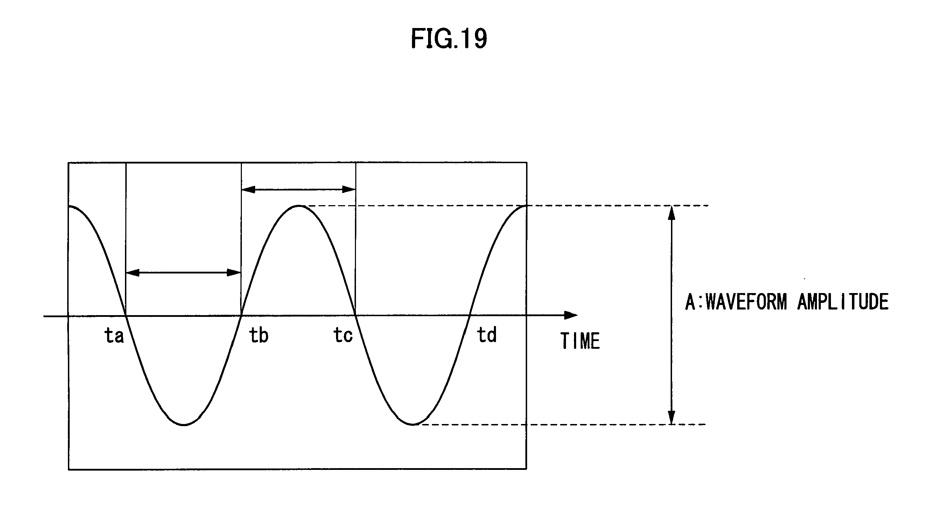

The waveform amplitude is the amount (both amplitudes of the reproduction signal) represented by "A" in Fig. 19. As the output value is larger, the signal quality is said to be more favorable. With regard to the variation of the waveform width (time width), times (ta, tb, tc, td ...) of zero cross (the time at which the waveform intersects the vertical axis zero) of the target waveform is obtained as shown in Fig. 19. As is obvious from Fig. 19, each of ta to tb, tb to tc, tc to td, and the like is the width (corresponding to 1/2 pulse) of the waveform. Therefore, the standard deviation is calculated from each of the values, and set as "waveform width variation". It can be said that as the waveform width variation is smaller, the signal quality is more favorable.

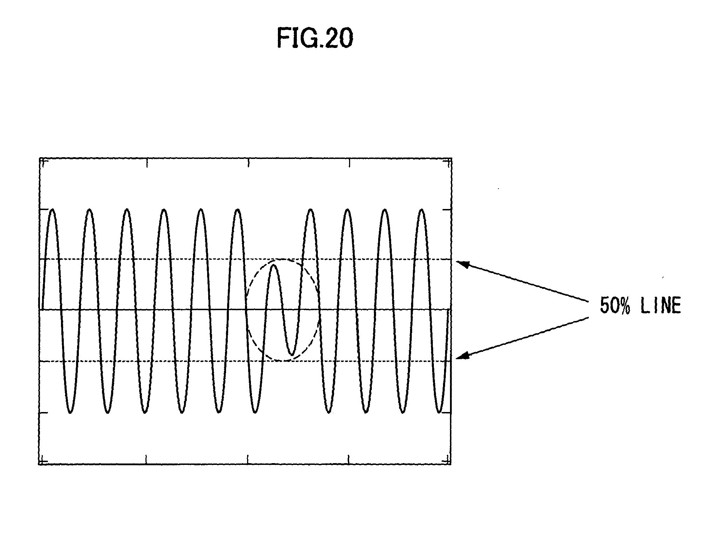

The incomplete pulse occurrence rate is the occurrence rate of the pulse of which amplitude is 50% or less as compared with the other pulses as the pulse enclosed by the two-dot chain line in Fig. 20. It can be said that as the value is smaller, the signal quality is more favorable.

The constitution for evaluating the servo signal transferred to the slave disk will be described hereinafter.

The slave disk is mounted to the shaft of a spindle motor, and is rotated at a predetermined speed (rotational frequency). A magnetic head is provided to be close to the surface of the slave disk at a predetermined flying height. The magnetic head is movable to a predetermined position by a positioner. The magnetic head is for performing recording and reproduction.

Further, a synchroscope (oscilloscope) is connected to the magnetic head, so that the lead signal waveform from the magnetic head is displayed on the display of the synchroscope. A spindle motor is further connected to the synchroscope, so that an index signal outputted when the rotor of the spindle motor is at a predetermined rotational angle is inputted as a trigger signal.

As shown in Table 2, the reproduction signal by transfer using the master carrier having the perpendicular magnetic anisotropy according to the present invention provides more favorable results than conventional one in all the items that are "waveform amplitude", "waveform width variation" and "incomplete pulse occurrence rate".

## Claims

1. A master carrier (20) for magnetic transfer which is brought into contact with a magnetic recording medium (10) when magnetic information is transferred to the magnetic recording medium, comprising:
a transfer portion on which a magnetic layer (204, 214) corresponding to magnetic information for transfer is formed; and
a non-transfer portion (207) which forms a concave shape relatively low with respect to the transfer portion having the magnetic layer,
wherein the magnetic layer has perpendicular magnetic anisotropy, with residual magnetization Mr of 500 emu/cc or less, and saturation magnetization Ms of 900 emu/cc or more.

2. The master carrier (20) for magnetic transfer according to claim 1,
wherein the magnetic layer (204, 214) is made of CoPt.

3. The master carrier (20) for magnetic transfer according to claim 1,
wherein the magnetic layer (204, 214) is made of Co₄4Pt₁ (at%).

4. The master carrier (20) for magnetic transfer according to any one of claims 1 to 3, further comprising
an under layer, under the magnetic layer (204, 214) , which is made of any one of CoCr, Ru, and Pt, or a combination of any of CoCr, Ru, and Pt.

5. The master carrier (20) for magnetic transfer according to any one of claims 1 to 4,
wherein the magnetic layer (204, 214) of the transfer portion on the master carrier for magnetic transfer is more convex than other portions.

6. A magnetic transfer method, comprising:
an initial magnetizing step of, using a perpendicular magnetic recording medium (10) with a coercive force Hc of 4000 Oe or more, initially magnetizing the perpendicular magnetic recording medium in a perpendicular direction;
a tight contact step of bringing the master carrier (20) for magnetic transfer according to any one of claims 1 to 5 into tight contact with the perpendicular magnetic recording medium after the initial magnetizing step; and
a transfer step of applying a perpendicular magnetic field whose direction is opposite to that of the initial magnetization with the perpendicular magnetic recording medium in tight contact with the master carrier for magnetic transfer, and transferring magnetic information to the perpendicular magnetic recording medium.

7. A magnetic recording medium (10) produced by using the master carrier (20) for magnetic transfer according to any one of claims 1 to 5, or by using the magnetic transfer method according to claim 6.
